# EUROPEAN PATENT SPECIFICATION

(11) **EP 3 868 238 B1**
(45) Date of publication and mention of the grant of the patent: **07.06.2023**
(21) Application number: 20382118.6
(22) Date of filing: 18.02.2020
(51) Int. Cl.: A43B 1/06, A43B 13/12, A43B 17/00, A43B 17/14, B29D 35/00, B29D 35/12, A43B 1/10, A43B 13/18, B29D 35/14, A43B 3/00

(54) **FOOTWEAR MIDSOLE AND METHOD OF MANUFACTURE**
SCHUHSOHLE UND VERFAHREN ZUR HERSTELLUNG
SEMELLE DE CHAUSSURE ET PROCÉDÉ DE FABRICATION

(43) Date of publication of application: 25.08.2021
(73) Proprietor: Proinvex Urban S.L., 03203 Elche - Alicante (ES)
(72) Inventor: Urban Bru, Francisco Manuel, 03203 Elche - Alicante (ES)
(74) Representative: Carlos Hernando, Borja

(56) References cited:
- CN-A- 108 903 127
- DE-A1-102007 022 140
- FR-A1- 2 547 706
- FR-A1- 2 633 810
- KR-A- 20030 077 274

## Description

### OBJECT OF THE INVENTION

The invention relates to a footwear midsole, sandals or closed shoes, and a method for manufacturing a footwear midsole obtained by moulding. The midsole has a first body with a hollow or recess that determines perimeter walls in said first body, made of a first material preferably composed of a mixture of rubber, or polyurethane, and cork, with an intermediate filling of a second material that extends above the perimeter walls and a third material, acting as a lining, overlaid on the second material, such that the second material between the walls of the first material and the lining determines a variable geometric design or shape depending on the design of the midsole. The method uses a special mould which, in addition to a lower part and an upper part, is equipped with an intermediate piece, such that the method presents a casting phase between the aforementioned walls of a filling layer of said second material, preferably polyurethane.

The field of application of the present invention is within the sector of the footwear industry, focusing specifically on the area of the manufacture of midsoles for any type of footwear, such sandals or closed shoes.

FR2547706A1 discloses a layered sole comprising polyurethane and FR2633810A1 discloses a layered sole comprising polyurethane and rubber.

### BACKGROUND OF THE INVENTION

As a reference to the current state of the art, it should be noted that footwear midsoles that have at least one essential part made of a material that combines rubber with cork, and that have a main characteristic of making the midsoles lighter, usually being intended for summer footwear, are known.

The main drawback of these midsoles is that they are usually composed of said rubber with cork material that has two densities, a higher density in the outer area of the midsole, which is therefore harder, to provide stiffness and solidity to the midsole, and an inner area, which is therefore softer than the previous one, to provide elasticity and comfort to the user on the part that supports the sole of the foot the most. Said first material is covered with a lining. The presence of a material with two densities means that in the area where the two materials meet, usually on the periphery, there is a support area of the sole of the foot that is more uncomfortable than the inner area because the foot will rest on a softer area on the inside of the midsole but also on a harder area on the outside area of the midsole. Although the difference in densities of the material between the inner and outer areas of the midsole may vary, providing greater comfort to the user by supporting the sole of their foot on the footwear midsole, there is always that difference in density between the two areas which causes a place on the footwear midsole to be uncomfortable for the foot that rests on it. Although the foot is mostly supported on the inside of the footwear midsole, there is always a part of the foot, no matter how small, resting on the harder outer area, which is therefore more uncomfortable. Alternatively, the material can have a single density, which must be rigid in order to maintain the stability of the midsole, for example, with the exterior stiffness of the midsole described above, which results in a more uncomfortable midsole for the user due to the aforementioned stiffness.

The present invention allows the entire sole of the foot to rest on a surface with the same density, thus providing greater comfort to the user and overcoming the existing problems in the sector.

### EXPLANATION OF THE INVENTION

The first object of the present invention is a footwear midsole according to claim 1.

Specifically, this footwear midsole incorporates:
- a first lower body of a first material, which is rubber with cork or polyurethane with cork, with a hollow or void that forms a perimeter wall, i.e., a body with a lower base with perimeter walls that act as a vessel or container to later receive a second material,
- a second material, polyurethane, which fills the hollow in the first body and extends over the walls of the first body, forming an intermediate layer, area or body, and
- a third material, natural or synthetic, as a lining of the midsole, overlaid on the second material.

The aforementioned midsole, in addition to solving the existing drawbacks in the midsoles of the state of the art, presents an aesthetic advantage since it allows the geometric shape formed by the second material in that intermediate layer or area, between the first body and the lining, on the periphery of the midsole, to vary depending on the desired design.

The second material, introduced in the hollow of the first body by casting, is polyurethane, while the lining of the midsole is made of a third material, which may be natural or synthetic, according to the needs. The hollow in the first body may have different shapes and different depths.

Likewise, although this description makes reference to midsoles for footwear, which may be any kind of footwear, such as sandals or closed shoes, said midsoles may also incorporate a base under the first body of the midsole. In addition, the midsole may or may not be anatomical, depending on the shape of the upper part of the midsole on which the foot rests. Additionally, it is possible to obtain a complete shoe, i.e., an midsole with an outsole, a lining and even the leather of the footwear, depending on the method of manufacture used.

The design of the second material in the intermediate area of the midsole, between the walls of the first body and the lining, can vary between the upper side of the wall of the first body and the upper side of the second material, which coincides with the lining, and can also have variations in the side surface of the second material in said intermediate area. Consequently, the upper side of the perimeter wall, as well as the upper side of the intermediate area, may incorporate straight lines, curved lines, wavy lines or zigzag lines, among other shapes, and the side surface of this intermediate area can incorporate any embossed shape, such as, for example, the logo or brand of the footwear manufacturer, as well as any other design. Likewise, the aforementioned intermediate area may itself be embossed such that the entire intermediate area may protrude with respect to the perimeter wall of the first body or be recessed with respect to said perimeter wall.

A second object of the invention is a method for the manufacture of an midsole like the one described above according to claim 2.

Specifically, the method for manufacturing footwear midsoles, obtained by moulding, with a first hollow lower body of a first material, which is rubber with cork or polyurethane with cork, an upper lining and an intermediate filling, which is polyurethane, comprises the following steps:
a) tightly inserting a first hollow body with a perimeter wall and a tab on its periphery, intended to rest on the upper surface of a lower part of the mould, into said lower part of a mould,
b) positioning an intermediate plate of the mould on said lower part of the mould, resting on the tab of the first body, and with said intermediate plate comprising a central through opening that approximately coincides with the hollow or void of the first body, with said opening determining a side wall and a perimeter edge which will determine the upper surface of the midsole,
c) arranging at least one lining of a third material on an upper part of the mould,
d) casting the second material into the hollow of the first body,
e) placing, or lowering, the upper part of the mould, with the lining in place, tightly onto the intermediate plate,
f) expanding and curing the second material inside the mould,
g) opening the upper part of the mould and of the intermediate plate, and
h) extracting the midsole from the lower mould.

At least two alternatives are considered for the arrangement of the lining on the upper part of the mould, that is, for step c):
- A first option consists of positioning the lining, with dimensions larger than those of the perimeter edge of the intermediate plate, on the intermediate plate and then lowering the upper part of the mould onto said intermediate plate such that at least two points, or sharp nail-like elements, arranged on the upper part of the mould, pass through the lining material and are inserted into holes arranged on the perimeter edge of the intermediate plate. The upper part of the mould with the associated lining is then raised. This ensures the position of the lining in the mould before the casting of the second material in the first body in the next step d), as well as in step e) in which the upper part of the mould is placed or lowered onto the intermediate plate.
- A second option, alternative to the previous one, consists of manually placing the lining on the upper part of the mould, with an operator forcing the lining to pass through several points arranged on the upper part of the mould, as in the previous example. Next, the second material is cast according to step d), and in step e), the upper part of the mould with the lining is placed on the intermediate plate, by lining up the points of said upper part with holes in the intermediate plate.
- A third option, alternative to the previous ones, consists of incorporating a synthetic or natural material into the upper part of the mould that will make up the leather of the shoe or sandal, in addition to incorporating the lining, such that after casting the second material, not only the lining, but also the leather of the footwear is incorporated into the midsole. Consequently, an midsole with the leather of the footwear on it will be obtained, so the only remaining step is to add the outsole to the midsole to finish the shoe. It should be noted that the outsole may also be incorporated into the first body prior to insertion into the lower part of the mould, which means that by following the process described above, it is possible to obtain the finished footwear, i.e., with the outsole, the midsole, the lining and the leather, in addition to the intermediate layer of the second material.

After the second material has expanded and cured, the complete midsole is extracted with the perimeter tab on the first body and the lining with dimensions larger than those of the midsole, to subject this intermediate midsole to a process of manual die-cutting or refining of the surplus from the lining, from the tab of the first material and even of the second material that may sometimes be present.

After removing the surplus, the finished midsole is available according to the characteristics mentioned above. This midsole may be subjected to other processes, such as cleaning, and then incorporated into footwear, a sandal or a closed shoe. Sometimes the midsole may be used as an outsole if, for example, a special base is provided on the lower surface of the first body for this, i.e., on that surface opposite the hollow or void.

A third object not belonging to the claimed invention is a mould for the manufacture of footwear midsoles, according to the method described above, comprises:
- a lower part, with a recessed space in the shape of the lower part of the footwear outsole to be manufactured, and in particular, with the shape of a first body with a void or hollow that determines perimeter walls and that will be introduced into the recess of the mould,
- an upper part with a surface that presents the surface of the footwear midsole to be manufactured, and
- an intermediate plate with a central through opening that determines a side wall and a perimeter edge, with said edge being complementary to the peripheral area of the upper part of the mould, thus determining the position of coupling between the upper part of the mould and the edge and the shape of the upper surface of the midsole. Said intermediate plate may have a second wall arranged on the perimeter edge, at a higher elevation than the aforementioned side wall, and preferably perpendicular to the aforementioned perimeter edge. This second wall helps to determine a space to receive the upper part of the mould and to reinforce said intermediate plate. According to the above, the intermediate plate may be flat, with the perimeter edge only, or may incorporate a recess with a second wall.

Preferably, and to facilitate the positioning of a lining in the mould, the edge of the intermediate plate comprises at least two holes and the protrusion of at least two points, sharp elements or nails from the upper part, positioned to correspond to one another so that when the upper part of the mould is positioned on the intermediate plate, the points, nails or sharp elements are inserted into the holes in said plate.

If, in addition to the lining, the lining plus the leather of the footwear, shoe or sandal is to be incorporated into the upper part of the mould, other systems or means of attachment to the upper part of the mould other than those used to secure the lining may be used. Likewise, the upper part of the mould may be divided into several parts.

It should be noted that the design of the midsole on its periphery, in particular in the intermediate layer of the second material, is determined by the side wall of the intermediate plate of the mould, i.e., the side wall that determines the through opening of said plate. Said side wall may have a smooth surface or a concave or convex surface. In addition, different types of embossing or bas-reliefs with different designs can be arranged on this surface, such as, for example, the brand or logo of the footwear for which the midsole is intended, or other figures, such as animals, flowers, geometrical figures, etc.

Likewise, the upper surface of the lower part of the mould is complementary to the lower surface of the intermediate plate, and depending on the shapes of these surfaces, will result in different shapes on the lower side of the intermediate layer of the second material, such as, for example, flat, wavy or sloping lines.

The height of the intermediate layer of the second material is determined by the height of the wall of the intermediate plate.

The main advantages of the present invention are:
- Lighter weight of the midsole in those cases in which the filling of the second material is lighter than the material of the first body. This is of particular interest in midsoles made of rubber with cork, since the polyurethane introduced as a second material reduces the weight of an midsole that is made entirely of rubber with cork.
- The new midsole and the method of manufacture thereof, with the described mould, allow the incorporation of lateral decoration of the midsole, which may be embossed and include different designs.
- The midsole obtained with the method and the mould of the invention is more flexible than the midsoles made of only rubber with cork of the state of the art, which barely incorporate any filling between the base and the lining.

- The midsole, which is obtained with the method and the mould of the invention, does not have certain foot support areas that are harder than others. This is the case with the rubber with cork midsoles of the state of the art, which combine harder areas on the periphery of the midsole, with a higher proportion of cork (to give solidity to the midsole), with softer areas in the central part of the midsole, with a higher proportion of rubber than cork (to give greater comfort to the largest area of foot support). The second material that determines the intermediate layer of the midsole separates the sole of the foot from said harder areas, which are usually located on the periphery of the midsole.
- Lastly, another advantage provided by the new midsole, obtained with the method of the invention, is that any potential manufacturing imperfections that may exist on the cork/rubber perimeter or side walls of the first body are corrected, since, when it is placed in the mould and the second material, preferably polyurethane, is cast in it, when this second material expands and cures, it pushes the perimeter walls of the first body against the inside of the lower part of the mould, thus correcting potential imperfections in said walls.

### DESCRIPTION OF THE DRAWINGS

As a complement to the description of the present invention, and for the purpose of helping to make the features of the invention more readily understandable, this specification is accompanied by a set of drawings which form an integral part of it and, by way of illustration and not limitation, represent the following:
Figures 1, 2, 3 and 4 show a series of perspective views of an exemplary embodiment of the mould object of the invention to carry out the method for manufacturing the midsole, shown at different steps of said method, showing the main parts and elements that it comprises.
Figure 5 shows an upper plan view of an example of the midsole obtained, in its step prior to the trimming of the surplus material around the perimeter.
Figure 6 shows a perspective view of an example of the midsole obtained, according to the method of the invention.
Figures 7 and 8 show two perspective views of the respective cross-sections, longitudinal and transversal respectively, of the midsole obtained, according to the invention, showing the parts that make up the midsole and the configuration thereof.

### PREFERRED EMBODIMENT OF THE INVENTION

In view of the aforementioned figures, an exemplary embodiment of the midsole and method objects of the invention are described below.

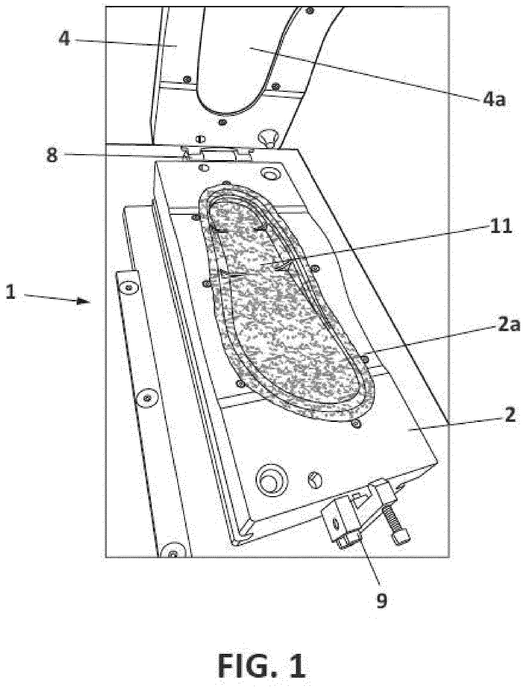

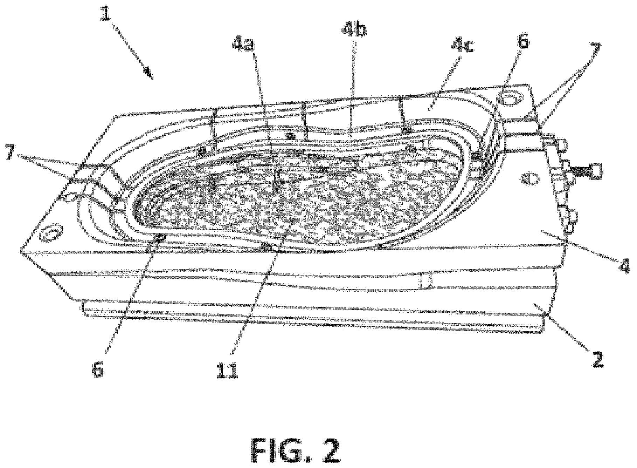

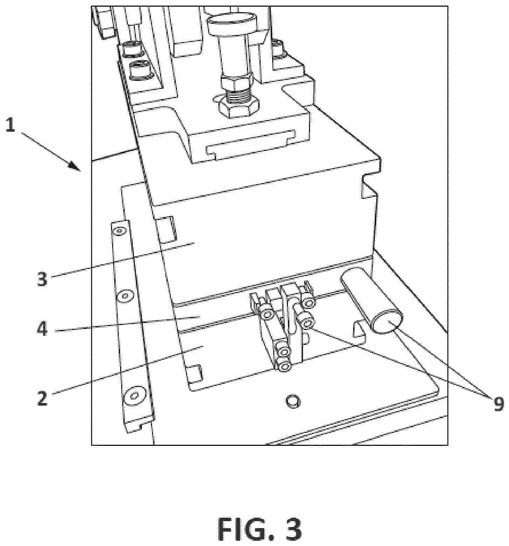

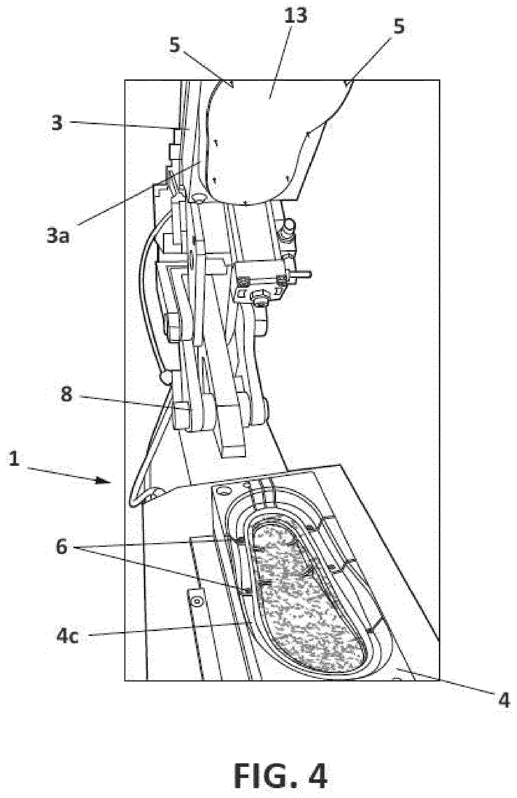

As shown in Figures 1 to 4, the mould (1) for manufacturing a footwear midsole (11), according to the method of the invention, comprises a lower part (2), with a recessed space (2a) to tightly incorporate a first body (11) of a first material, rubber with cork or polyurethane with cork, with said first body having a void or hollow, as well as a perimeter tab that overlaps the upper surface of the lower part of the mould.

The mould further comprises an intermediate plate (4), which is placed on the lower part (2) of the mould and which has a through opening (4a) approximately coinciding with the void or hollow of the first body (11). Likewise, said intermediate plate has a side wall that delimits the through opening (4a) and a perimeter edge (4b) that will determine the shape of the upper surface of the midsole (10). The lower surface of the intermediate plate is located on the perimeter tab of the first body (11) of the midsole (11). In this preferred form, said intermediate plate also has a recess (4c) over the perimeter edge (4b) determined by a second wall on the perimeter of the edge (4b). Alternatively, the intermediate plate may possibly not include the recess (4c) with the wall on its perimeter, i.e., it may be a plate without said second wall that determines the aforementioned recess. The intermediate plate (4) may incorporate slots (7) for the outlet of air or gases.

The last part of the mould is the upper part (3) of the mould, preferably comprising a protrusion (3a) intended to be inserted into the recess (4c) of the intermediate plate. In addition, the protrusion (3a) of the upper part (3) of the mould (1) has several points (5), or pointed elements, preferably at least two, such that when the upper part (3) of the mould is lowered or placed on the intermediate plate (4), they fit into holes (6) made to coincide with the perimeter edge (4b) of said intermediate plate (4). If the intermediate plate does not have the second side wall, i.e., if it does not have the recess, the upper part of the mould may not incorporate the aforementioned protuberance.

To use the aforementioned mould (1), the first body(11), of a first material that is rubber with cork or polyurethane with cork, is inserted tightly in the recess (2a) of the lower part (2) of the mould, such that the perimeter tab of said first body rests on the upper surface of the lower part (2) of the mould.

Next, the intermediate plate (4) is lowered or placed on the lower part (2) of the mould, such that the lower surface of the plate (4) rests on the perimeter tab of the first body (11).

The lining (13) of the footwear midsole, made of a third material, which may be natural, leather, synthetic, or microfibre, is then placed on the plate (4), covering the central opening (4a) of the plate. The upper part (3) of the mould is then lowered or positioned on the intermediate plate (4), causing the points (5) of the protrusion (3a) to pass through the lining (13), with said points (5) being inserted into the holes (6) on the edge (4b) of the intermediate plate while the protrusion (3a) is inserted into the recess (4c) of the plate (4). After this operation, the upper part (3) of the intermediate plate (4) is raised or separated again.

The next step is to cast the second material (12), polyurethane, as filler material for the midsole (10), inside the first body (11), through the opening (4a) of the intermediate plate (4). Once said polyurethane (12) has been cast, the upper part (3) of the mould is again lowered or positioned on the intermediate plate (4) and the polyurethane is allowed to expand and cure.

Once the polyurethane (12), or second material, has cured, the upper part (3) and the intermediate plate (4) of the mould (1) are raised and the footwear midsole (10) is removed, which has several surplus areas (10a) generated by the perimeter tab of the first body (11), to the excess lining (13) and sometimes to the excess of the second material (12). These surplus areas are removed by manual or refined die-cutting.

Said midsole will have a first body (11) of a first material, rubber with cork or polyurethane with cork, with a perimeter wall of said material, an intermediate layer of a second material (12), polyurethane, arranged immediately on the perimeter wall of the first body (11) and a lining (13) of a third material, preferably leather or microfibre, overlaid on the second material (12).

The design of the intermediate layer of the second material (12) is defined by the configuration of the side wall of the opening (4a) of the intermediate plate (4). This side wall may be, for example, concave, convex, flat, among other options, and in addition, may incorporate embossing or bas-reliefs, which may have different designs, such as animals, trademarks, flowers, geometric patterns, etc. The height of this wall will provide the height to the intermediate layer (12) of the second material.

Additionally, the lower surface of the intermediate plate (4) is complementary to the upper surface of the lower part (2) as well as to the shape of the perimeter tab of the first body (11). Consequently, by alternating the shapes of said surfaces, the shape of said intermediate layer of the second material (12) is modified.

Preferably, all of the parts (2, 3 and 4) of the mould (1) are joined together by a joint (8) and, in addition, they are equipped with closure elements (9) to seal the mould (1) prior to casting between the lower part (2) and the intermediate plate (4) and subsequently during the expansion and curing of the second material (12) after lowering the upper part (3) of the mould.

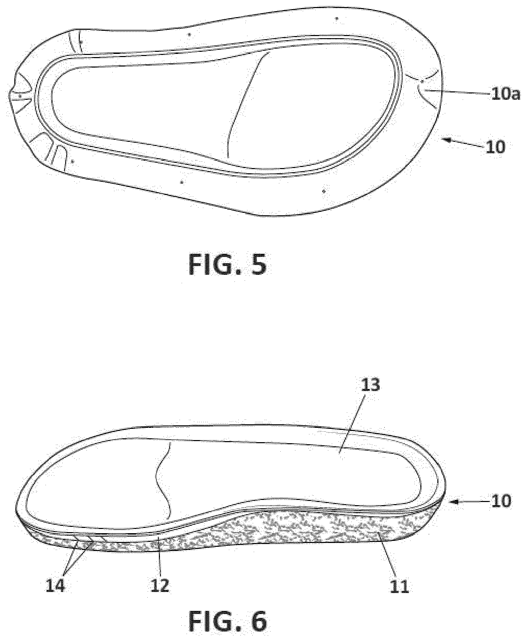

Figure 5 shows the midsole (10) obtained with the described mould (1), prior to the removal of the surplus areas (10a) from the midsole.

Figures 6 to 8 show an exemplary embodiment of the midsole (10) obtained in the described mould (1) and according to the method object of the invention, showing the configuration of the same comprising a lower base (11) made of a first material, rubber with cork or polyurethane with cork, an upper lining (13) made of a third material, preferably leather or microfibre, and an intermediate layer, or body, (12) made of a second material, polyurethane,

Figure 6 shows an midsole (10) in which the different layers that make up the midsole (10) are visible, showing how the intermediate layer (12) of the second material extends above the perimeter wall, or walls, of the first body (11), and eliminating the direct support of the sole of the foot on said walls. This figure shows a decorative example of the intermediate layer, decorative, and therefore optional, markings (14) in the intermediate area (12) of the front part of the midsole, corresponding to several vertical lines in bas-relief. These decorative vertical lines correspond to lines embossed in the side wall of the intermediate plate and that were marked on the intermediate layer (12) of the second material during the manufacture process. Likewise, it shows how the lower side of this intermediate layer (12) is a line that is continuous and laterally flat. As mentioned, depending on the configuration of the intermediate plate (4), mainly of its side wall, as well as its lower surface, one design or another can be generated on the intermediate layer (12) of the footwear midsole (10).

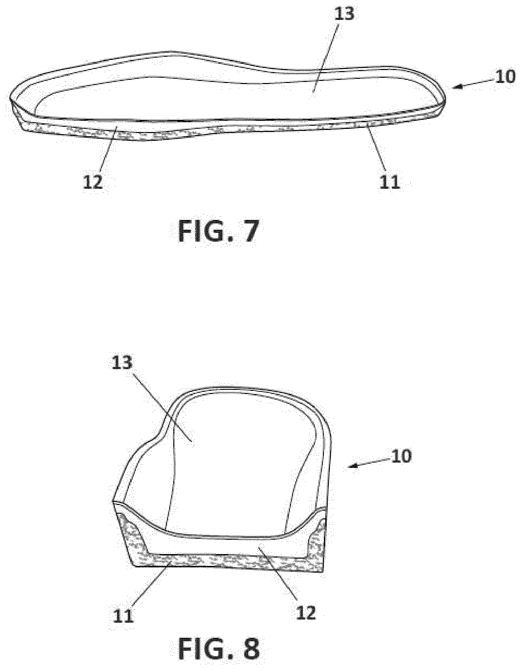

Figure 7 shows a longitudinal cross-section of the aforementioned midsole (10) which also shows the different components of the midsole (10), specifically, the void or hollow of the first body (11) and its perimeter wall or walls, as well as the filling of the second material that determines the intermediate layer (12).

Figure 8 shows a cross-section in which the perimeter wall or walls of the first body (11) are shown, on which the second material of the intermediate layer (12) is overlaid, preventing the user from noticing, when resting the sole of the foot on the footwear midsole (10), that these perimeter walls are made of a first material that is harder than the second material, and therefore improving user comfort.

## Claims

1. A footwear midsole(10) **characterised in that** it comprises:
- a first lower body (11), made of a composite material of rubber with cork or polyurethane with cork as a first material, which comprises a hollow determined by a perimeter wall,
- polyurethane as a second material that fills the hollow and extends above the perimeter wall of the first lower body (11), determining an intermediate layer (12), and
- a third material, as a lining (13) of the midsole, overlaid on the second material.

2. A method for manufacturing footwear midsoles (10), of the type in claim1, **characterised in that** it comprises the following steps:
a) Inserting in a lower part (2) of a mould (1) a first hollow body (11), of a composite material of rubber with cork or polyurethane with cork, with a perimeter wall that has a tab on its periphery that rests on the upper surface of said lower part of the mould,
b) positioning an intermediate plate (4) of the mould (1) on said lower part (2) of the mould (1), resting on the aforementioned tab, and with said intermediate plate (4) comprising a central through opening (4a) approximately coinciding with the hollow of the first body (11), with said opening (4a) determining a side wall and a perimeter edge (4b) which will determine the upper surface of the midsole,
c) arranging at least one lining (13) of a third material on an upper part (3) of the mould (1),
d) casting polyurethane as a second material into the hollow of the first body (11),
e) placing the upper part (3) of the mould (1) with the lining (13) on the intermediate plate (4), resting the lining (13) on the perimeter edge (4b) of the intermediate plate (4),
f) expanding and curing the second material between the inside of the first body (11), mould (1) and the lining (13),
g) opening the upper part (3) of the mould (1) and of the intermediate plate (4), and
h) extracting the midsole from the lower mould (2).

3. The method, according to claim 2, **characterised in that** the lining (13) is positioned in step c) in at least two points (5) arranged on the upper part (3) of the mould (1), which in step e) will be inserted into holes (6) in the intermediate plate (4).

## Patentansprüche

1. Fußbekleidungsmittelsohle (10), **dadurch gekennzeichnet dass** sie Folgendes umfasst:
- einen ersten unteren Körper (11), der aus einem Verbundmaterial aus Gummi mit Kork oder Polyurethan mit Kork als einem ersten Material besteht und einen Hohlraum umfasst, der durch eine Umfangswand bestimmt wird,
- Polyurethan als ein zweites Material, das den Hohlraum ausfüllt und sich über die Umfangswand des ersten unteren Körpers (11) erstreckt und eine Zwischenschicht (12) bestimmt, und
- ein drittes Material als eine Einfassung (13) der Mittelsohle, das das zweite Material überlagert.

2. Verfahren zum Herstellen von Fußbekleidungsmittelsohlen (10) der Art von Anspruch 1, **dadurch gekennzeichnet, dass** es die folgenden Schritte umfasst:
a) Einsetzen eines ersten hohlen Körpers (11) aus einem Verbundmaterial aus Gummi mit Kork oder Polyurethan mit Kork mit einer Umfangswand, die an ihrer Peripherie eine Lasche aufweist, die auf der Oberfläche eines unteren Teils einer Form aufliegt, in den unteren Teil (2) der Form (1),
b) Positionieren einer Zwischenplatte (4) der Form (1) auf dem unteren Teil (2) der Form (1), die auf der vorgenannten Lasche aufliegt, und wobei die Zwischenplatte (4) eine zentrale Durchgangsöffnung (4a) umfasst, die sich ungefähr mit dem Hohlraum des ersten Körpers (11) deckt, wobei die Öffnung (4a) eine Seitenwand und eine Umfangskante (4b) bestimmt, die die Oberfläche der Mittelsohle bestimmen,
c) Anordnen von mindestens einer Einfassung (13) eines dritten Materials auf einem oberen Teil (3) der Form (1),
d) Gießen von Polyurethan als einem zweiten Material in den Hohlraum des ersten Körpers (11),
e) Platzieren des oberen Teils (3) der Form (1) mit der Einfassung (13) auf der Zwischenplatte (4), wobei die Einfassung (13) auf die Umfangskante (4b) der Zwischenplatte (4) aufgelegt wird,
f) Ausdehnen und Aushärten des zweiten Materials zwischen der Innenseite des ersten Körpers (11), der Form (1) und der Einfassung (13),
g) Öffnen des oberen Teils (3) der Form (1) und der Zwischenplatte (4) und
h) Entnehmen der Mittelsohle aus der unteren Form (2).

3. Verfahren nach Anspruch 2, **dadurch gekennzeichnet, dass** die Einfassung (13) in Schritt c) an mindestens zwei Stellen (5), die auf dem oberen Teil (3) der Form (1) angeordnet sind, positioniert wird, die in Schritt e) in die Löcher (6) in der Zwischenplatte (4) eingesetzt wird.

## Revendications

1. Semelle intermédiaire de chaussures (10) **caractérisée en ce qu'**elle comprend :
- un premier corps inférieur (11), fait d'un matériau composite en caoutchouc avec du liège ou en polyuréthane avec du liège en tant que premier matériau, qui comprend un creux déterminé par une paroi de périmètre,
- le polyuréthane en tant que deuxième matériau qui remplit le creux et s'étend au-dessus de la paroi de périmètre du premier corps inférieur (11), déterminant une couche intermédiaire (12), et
- un troisième matériau, en tant qu'une doublure (13) de la semelle intermédiaire, superposé sur le deuxième matériau.

2. Procédé de fabrication de semelles intermédiaires de chaussures (10), du type de la revendication 1, **caractérisé en ce qu'**il comprend les étapes suivantes :
a) l'insertion dans une partie inférieure (2) d'un moule (1) d'un premier corps creux (11), d'un matériau composite en caoutchouc avec du liège ou en polyuréthane avec du liège, avec une paroi de périmètre qui a une languette sur sa périphérie qui repose sur la surface supérieure de ladite partie inférieure du moule,
b) le positionnement d'une plaque intermédiaire (4) du moule (1) sur ladite partie inférieure (2) du moule (1), reposant sur la languette susmentionnée, et avec ladite plaque intermédiaire (4) comprenant une ouverture traversante centrale (4a) qui coïncide approximativement avec le creux du premier corps (11), avec ladite ouverture (4a) déterminant une paroi latérale et un bord de périmètre (4b) qui détermineront la surface supérieure de la semelle intermédiaire,
c) l'agencement d'au moins une doublure (13) d'un troisième matériau sur une partie supérieure (3) du moule (1),
d) le coulage du polyuréthane en tant que deuxième matériau dans le creux du premier corps (11),
e) le placement de la partie supérieure (3) du moule (1) avec la doublure (13) sur la plaque intermédiaire (4), la doublure (13) reposant sur le bord de périmètre (4b) de la plaque intermédiaire (4),
f) l'expansion et le durcissement du deuxième matériau entre l'intérieur du premier corps (11), le moule (1) et la doublure (13),
g) l'ouverture de la partie supérieure (3) du moule (1) et de la plaque intermédiaire (4), et
h) l'extraction de la semelle intermédiaire du moule inférieur (2).

3. Procédé, selon la revendication 2, **caractérisé en ce que** la doublure (13) est positionnée à l'étape c) sur au moins deux pointes (5) agencées sur la partie supérieure (3) du moule (1), qui à l'étape e) seront insérées dans les trous (6) de la plaque intermédiaire (4).
